# EUROPEAN PATENT APPLICATION

(11) **EP 1 085 433 A2**
(43) Date of publication of application: **21.03.2001**
(21) Application number: 00307922.5
(22) Date of filing: 13.09.2000
(51) Int. Cl.: G06F 17/30

(54) **Information processing apparatus and method**

(30) Priority: 14.09.1999 JP 26123499
(71) Applicant: SONY CORPORATION, Tokyo 141 (JP)
(72) Inventor: Igarashi, Tatsuya, Shinagawa-ku, Tokyo 141 (JP)
(74) Representative: Pratt, Richard Wilson

(57) **Abstract**

Apparatus and method for efficiently obtaining desired information from an information storage medium wherein a plurality of elements or objects may be stored in the form of a descriptor structure. To obtain the desired information, type and identification data for the respective element or object may be utilized so as to enable the respective element to be directly accessed without having to access other elements such as those which precede the respective element. As a result, the operational efficiency may be increased. Desired information may also be written to the information storage medium.

## Description

### BACKGROUND OF THE INVENTION

The present invention relates to an information processing apparatus and method. Embodiments of the invention relate to such apparatus and method for obtaining desired information from an information memory in electronic devices such as a digital still camera and so forth in which the information is stored therein in a descriptor structure.

In a descriptor mechanism, a data structure on a target device side may be defined as a descriptor and information of the target device may be obtained and changed by urging or requesting a controller to access the data structure of the descriptor or address space. Although the target device side may impose only a small burden on the processing when data of the structured descriptor resides in a memory of the target device or when the amount of data of the descriptor is small, the following problems pertaining to a controller or the target device may exist.

With regard to the controller, when accessing address space, the controller may operate under the condition that all data having a descriptor structure arc mapped onto consecutive address space. As a result, when the controller wants to access only necessary data, the controller may also unavoidably access unnecessary data. Consequently, the controller may analyze such data so as to obtain only the necessary data. Further, to increase the efficiency of the data access network, data may be accessed together with the use of a large buffer in the controller. However, this arrangement may cause the data traffic to he increased. On the other hand, if the buffer or buffers in the controller are decreased by separately accessing data, the access efficiency may be decreased.

With regard to the target device, when a read request is issued from a controller, the target device may read out other data structure from a memory or necessary data from a medium such as a disk, and may return the same. In the case of a write request, an internal data structure concerning a write data portion and media data should be updated. When a method of managing data having a hierarchical structure is independently prescribed in the internal data and the media, the transform method may be complex and data may not be efficiently transformed. Moreover, since address space has a complex structure, the software may be complex and problems or hugs may not be easily verified.

An object list which realizes a hierarchical model of the descriptor may contain a data structure of a descriptor of an object entry. To update the object entry, access of the object list should he excluded and then the object entry should be accessed and updated. Note: the object entry may be accessed by the object list and may not be independently accessible. During this period, other object entry pertaining to such object list cannot he accessed.

With regard to an arrangement having a plurality of controllers, if a controller is inhibited from accessing a descriptor while another controller is writing to the descriptor, then such multi-controller arrangement may not be supported with high efficiency.

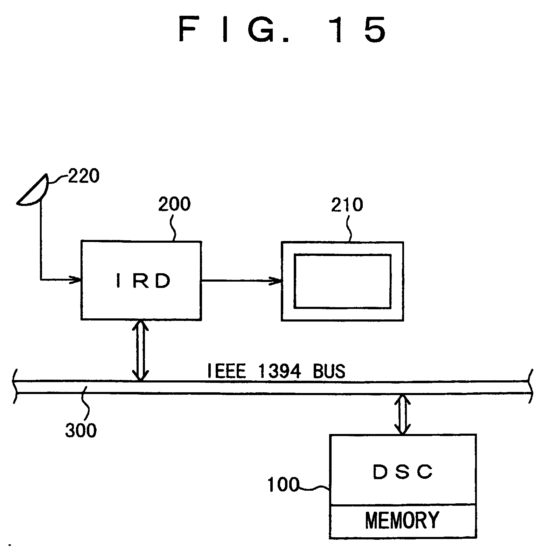

FIG. 15 illustrates a network system. As shown therein, such network system may include an integrated receiver decoder (IRD) 200 serving as a digital satellite broadcast receiver and a digital still camera (DSC) 100 interconnected to an IEEE 1394 bus 300. The IRD 200 and DSC 100 may be considered respective IEEE 1394 nodes. Further, a reception antenna 220 and a monitor 210 may he connected to the IRD 200.

In the network system of FIG. 15, the IRD 200 may access an information memory (which may be a flash memory) within the DSC 100, and may cause an image obtained by the DSC 100 to be displayed on a screen of the monitor 210 which may be a liquid-crystal display device and a cathode-ray tube. The information memory within the DSC 100 may have stored therein a plurality of kinds or types of information in the form of a descriptor structure.

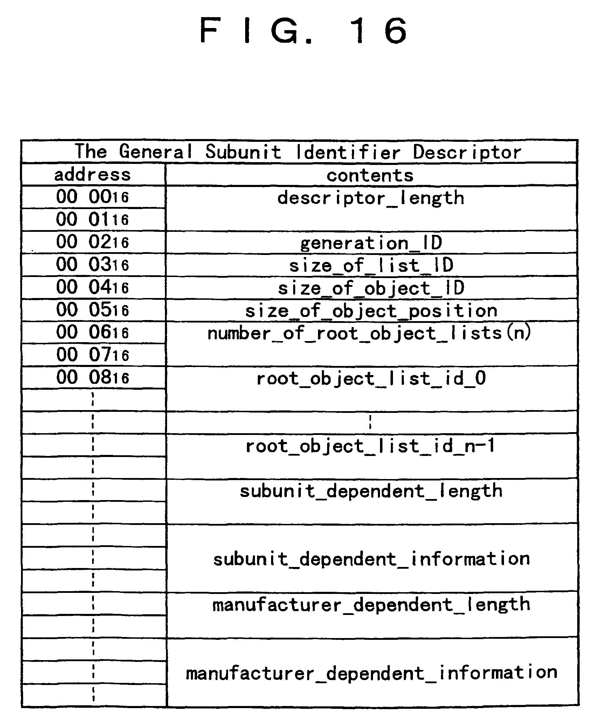

A structure of a subunit/identifier/descriptor is illustrated in FIG. 16. As shown therein, such descriptor may contain in formation such as "descriptor_length" indicative of the data length of the descriptor, "generation_ID" indicative of a version of an audio/video control (AV/C) command set, "size_of_list_ID" indicative of the size of a "list_ID", "size_of_object_ID" indicative of the size of an "object_ID", "size_of_object_position" indicative of the size of the position of the object within the object list, "number_of_root_object_lists (n)" indicative of the number of object lists relating to the descriptor and "root_object_list_id_0" to "root_object_list_id_n-1" for identifying the object lists of the corresponding number. Further, such descriptor may also include "subunit_dependent_length" indicative of the length of the subunit, "subunit_dependcnt_information" indicative of the information of the subunit, "manufacturer_dependent_length" indicative of the length of the manufacturer, and "manufacturer_dependent_information" indicative of the information of the manufacturer.

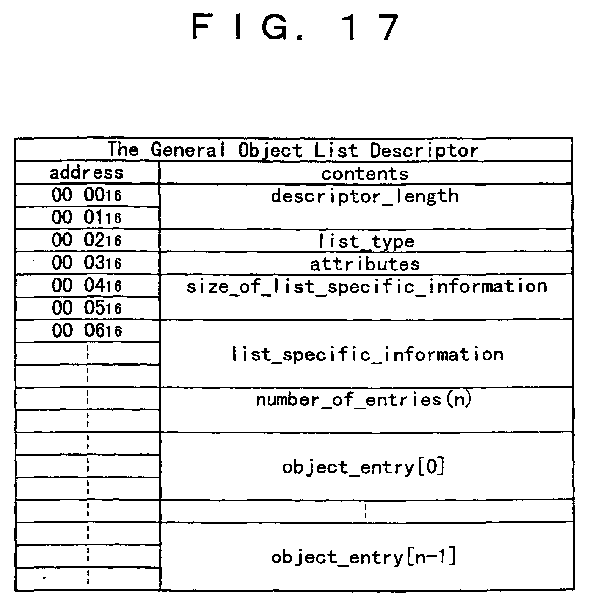

FIG. 17 illustrates a structure of an object list/descriptor which is referred to by the object list ID of the above-mentioned subunit/identifier/descriptor. This descriptor may contain information such as "descriptor_length" indicative of the data length of the descriptor, "list_type" indicative of the type of the corresponding list, "attributes" indicative of the existence or absence of a "child-list", "list_specific_information", "size_of_list_specific_information" indicative of its size, "number-of-entries (n)" indicative of the number of object entries and object entries "object-entry [0]" to "object-entry [n-1]" of the corresponding number.

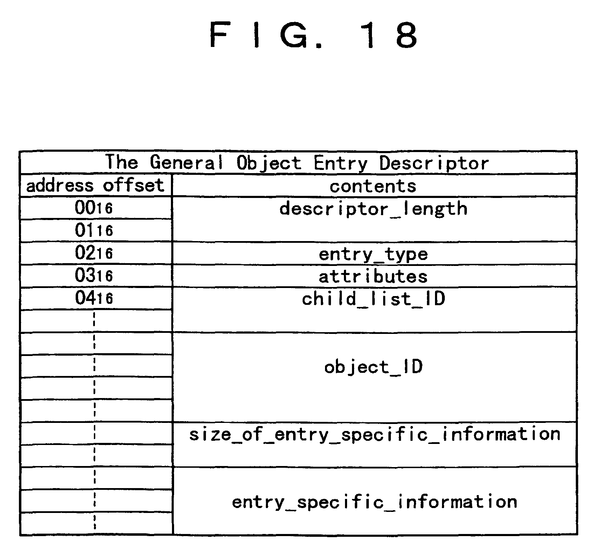

FIG. 18 illustrates a structure of an object entry/descriptor contained in the above-mentioned object list/descriptor. This descriptor may contain information such as "descriptor_length" indicative of the data length of the descriptor, "entry_type" indicative of the type of the corresponding entry, "attributes" similar to those in the above-mentioned object list/descriptor, "child_list_ID" whose existence or absence is indicated by the "attributes", "object_ID" representative of the ID of the object entry, "entry_specific_information" and "size_of_entry_specific_information" indicative of its size,

The above-mentioned structure of each descriptor is further described in the "AV/C Digital Interface Command Sot General Specification, Version 3.0".

A procedure in which an image may be displayed by use of the system of FIG. 15 will now be described.

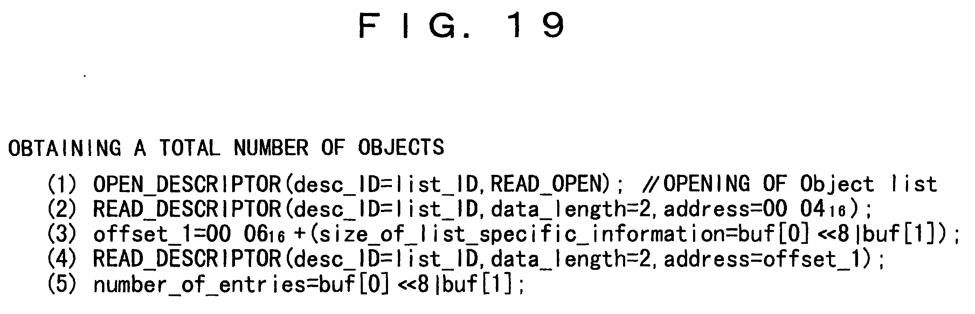

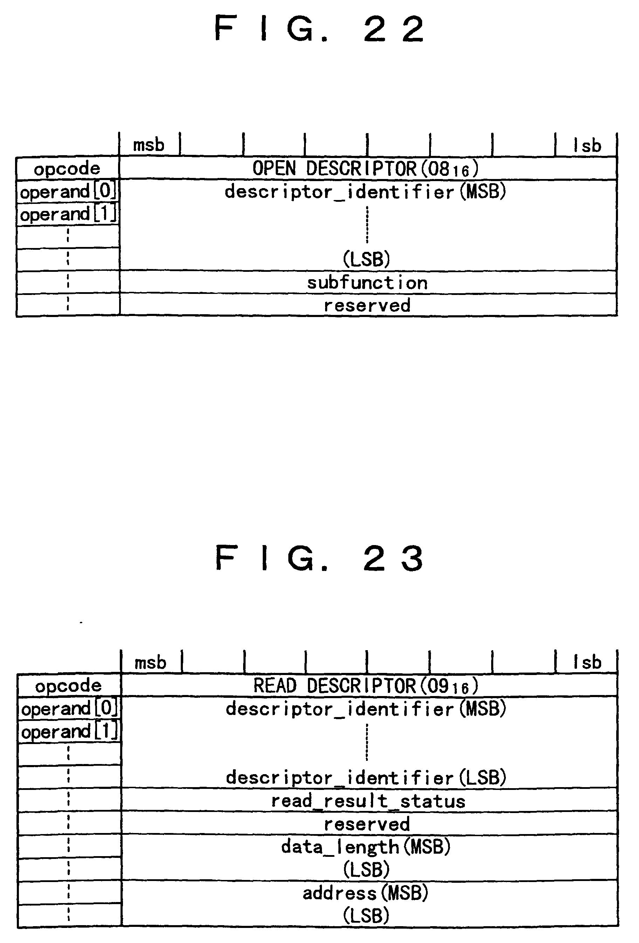

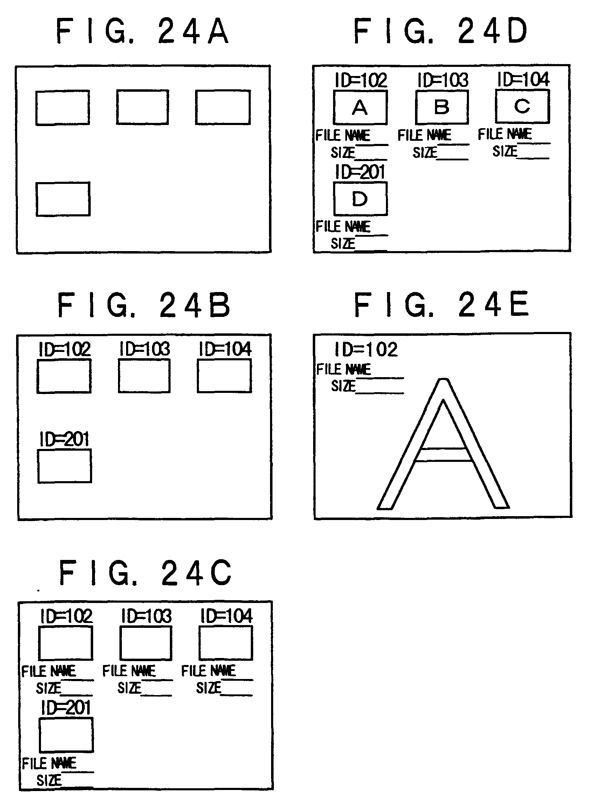

The IRD 200 may obtain the total number of objects from the object list/descriptor of the DSC 100 by use of the AV/C command of OPEN_DESCRIPTOR or READ_DESCRIPTOR and may obtain the "number-of-entries" of the objects by the procedure shown in FIG. 19. When the IRD 200 obtains the "number-of-entries", the IRD may cause a number corresponding thereto of rectangular areas to be displayed on the screen of the monitor 210 as shown in FIG. 24A. The AV/C OPEN_DESCRIPTOR and READ_DESCRIPTOR commands may be arranged as shown in FIGS. 22 and 23, respectively. These arrangements are further described in the "AV/C Digital Interface Command Set General Specification, Version 3.0".

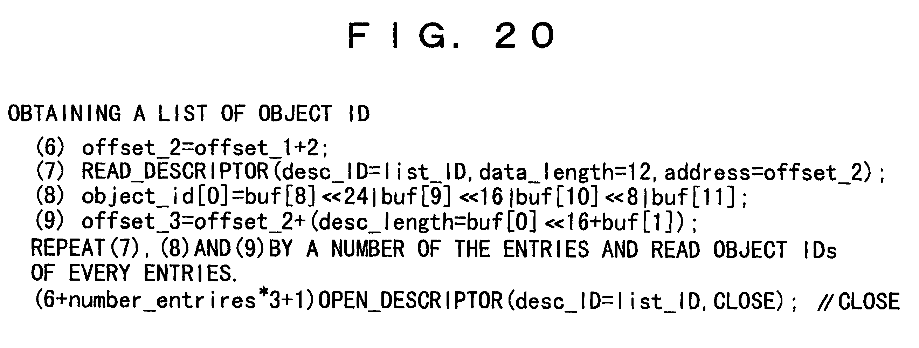

The IRD 200 may obtain a list of object IDs from the object entry/descriptor of the DSC 100 by use of the AV/C READ_DESCREPTOR command and may obtain a list of object IDs (ID list of a so-called DCF file) by use of the procedure shown in FIG. 20. When the IRD 200 obtains the list of the object IDs, the IRD may cause the object IDs to be respectively displayed in a manner corresponding to the rectangular areas on the screen of the monitor 210 as shown in FIG. 24B.

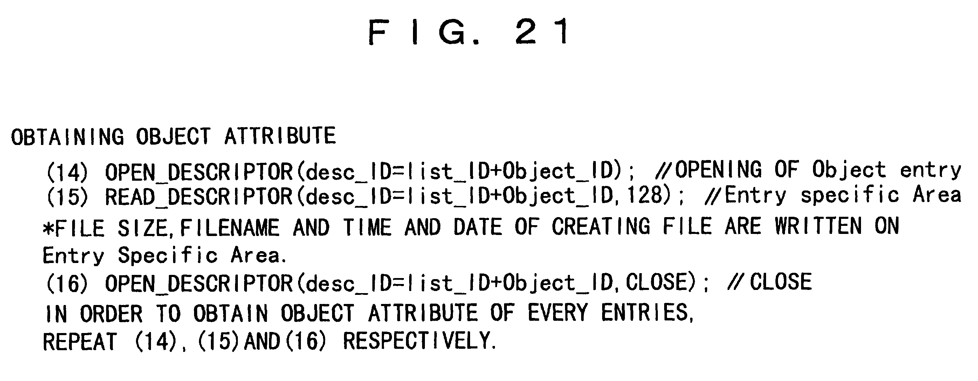

The IRD 200 may obtain attribute information (such as file name, size and date of creation) of each object from the object entry/descriptor of the DSC 100 by using the AV/C OPEN_DESCRIPTOR arid READ_DESCRIPTOR commands, and may obtain attribute information of each object by use of the procedure shown in FIG. 21. When the IRD 200 obtains the attribute information of each object, the IRD may cause the attributes (such as file names and sizes) to be respectively displayed in a manner corresponding to the rectangular areas on the screen of the monitor 210 as shown in FIG. 24C.

The IRD 200 may obtain thumb-nail or small-size image data of each object from the image memory of the DSC 100 and may cause such thumb-nail images to be respectively displayed within the rectangular areas on the screen of the monitor 210 as shown in FIG. 24D. When the thumb-nail images are displayed on the screen of the monitor 210, a user may designate an object, whereupon the IRD 200 may issue a command for causing the corresponding image to be displayed in a large-size format. Upon issuance of such command, the image data of the designated object may be obtained from (he image memory of the DSC 100 and a large-size image of the designated object may be displayed on the monitor 210 as shown in FIG. 24E.

Thus, as described above, the IRD 200 may use the AV/C OPEN_DESCRIPTOR and READ_DESCRIPTOR commands to obtain desired information from the DSC 100 and, as such, may be considered to have a relatively low efficiency.

In the procedures shown in FIGS. 19 to 21, the read size may be designated such that only as much necessary data as possible may he read out by a read/descriptor. As a result, the number of read/descriptors may be relatively large. If the read size of the read/descriptor is increased so as to enable information of several entries to be read together, then although data traffic from the reading operation may be decreased, the target device may prepare data not required by the controller, thereby resulting in an increased burden. As a result, during reading operations and so forth, processing may be delayed.

### SUMMARY OF THE INVENTION

Embodiments of the present invention seek to provide an information processing apparatus and method in which desired information may be efficiently obtained.

According to one aspect of the present invention, an information processing apparatus is provided which comprises an instruction device for issuing a request instruction having type and identification data for a desired type of information to an information memory adaptable for storing therein a plurality of types of information in the form of a descriptor structure, and an information reception device for receiving information corresponding to the request instruction from the information memory. The corresponding method is also provided.

According to another aspect of the present invention, an information processing apparatus is provided which comprises an instruction device for issuing a write request instruction for a desired type of information to a memory adaptable for storing therein a plurality of types of information in the form of a descriptor structure, and an input device for inputting the desired type of information having type and identification data. The corresponding method is also provided.

In an embodiment of the present invention, a reception request instruction for a desired type of information may be issued to an information memory. In response thereto, only the desired information may be transmitted from the information memory. Thus, desired information may be efficiently obtained.

An embodiment of the invention provides information processing apparatus and method wherein desired information may be efficiently received from the information memory by use of an issuing reception request instruction. A further aspect of the present invention also provides an information processing method comprising the steps of:
1. issuing a writing request instruction for a desired type of information to a memory adaptable for storing therein a plurality of types of information in the form of a descriptor structure; and
inputting said desired type of information having type and identification data.

The present invention also provides a computer program product comprising instructions, which when run on a data processor carries out the method of said further aspect of the invention or implements the apparatus of said one or another aspects of the invention.

A better understanding of the present invention will become apparent from the following detailed description of illustrative embodiments when read in connection with the accompanying drawings in which corresponding components are identified by the same reference numerals.

### BRIEF DESCRIPTION OF THE DRAWINGS

FIG. 1 is a diagram to which reference will be made in explaining an information element;
FIG. 2, is a diagram of a hierarchical structure for information elements;
FIG. 3 is a diagram of a command and response format for GET_NUM_OF_ENTRIES;
FIG. 4 is a diagram of a command and response format for LIST_ENTRY_ID;
FIGS. 5A-D are diagrams to which reference will be made in explaining Entry_Info_Type in a command format of LIST_ENTRY_ID and formats for a response thereto;
FIG. 6 is a diagram illustrating a manner in which information may be obtained from an object list descriptor by use of GET_NUM_ENTRIES and LIST_ENTRY_ID commands;
FIG. 7 is a diagram of a command and response format for GET_INFO_ELEMENT;
FIGS. 8A-B are diagrams to which reference will be made in explaining an Information Element Type in a command format of GET_INFO_ELEMENT and element types;
FIG. 9 is a diagram illustrating a manner in which an information element may be obtained from a subunit identifier descriptor by use of a GET_INFO_ELEMENT command;
FIG. 10 is a diagram illustrating a manner in which an information element may be obtained from an object list descriptor by use of a GET_INFO_ELEMENT command;
FIG. 11 is a diagram illustrating a manner in which an information element may be obtained from an object entry descriptor by use of a GET_INFO_ELEMENT command;
FIG. 12 is a diagram illustrating a manner in which an information element may be obtained from an information block within a descriptor by use of a GET_INFO_ELEMENT command;
FIG. 13 is a diagram of a command and response format for PUT_INFO_ELEMENT;
FIG. 14 is a diagram of a command and response format for GET_NUM_OF_ELEMENT;
FIG. 15 is a diagram of a network system;
FIG. 16 is a diagram of a structure for a subunit identifier descriptor;
FIG. 17 is a diagram of a structure for an object list descriptor;
FIG. 18 is a diagram of a structure for an object entry descriptor;
FIG. 19 illustrates a procedure of obtaining a total number of objects;
FIG. 20 illustrates a procedure of obtaining a list of object ID;
FIG. 21 illustrates a procedure of obtaining object attribute information;
FIG. 22 is a diagram of a structure for an AV/C OPEN DESCRIPTOR command;
FIG. 23 is a diagram of a structure of an AV/C READ DESCRIPTOR command; and
FIGS. 24A-E are diagrams of displayed images on a monitor.

### DESCRIPTION OF THE ILLUSTRATIVE EMBODIMENTS

The descriptor may define the data structure of the object descriptor for describing information but may not open the same to the controller as the address space. The present embodiment may define the descriptor as an object which may be an abstract concept (class or method) existing in the target device, and may conceal the internal data structure and the management mechanism of the descriptor of the object.

A command may be provided for obtaining and changing information of a descriptor. With such command, other information such as the preceding information need not he accessed, and instead desired information can be directly accessed at a respective data element unit in order to provide such information to the outside. Additionally, access may be executed at a unit consisting of all data elements and may be completed within a single transaction. Further, although the data element may not define the internal data structure of an object, it may define a command data structure and/or may define an interface.

To simplify the interface, the interface may be defined such that a hierarchical expression of the data structure of the data clement is avoided as much as possible. A layer may be provided between data elements in a manner as to handle a hierarchical data structure.

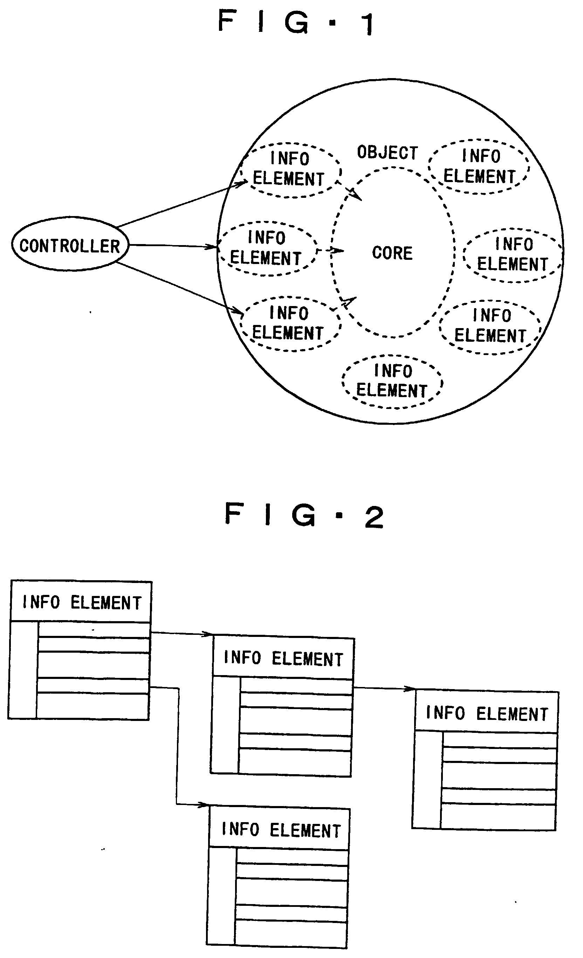

The object/descriptor structure of a hierarchical model of the descriptor may be expressed by a nested hierarchical structure such as that shown in FIG. 2. The data expression for the mechanism of these hierarchical models may be concealed, an object may be independent, and the hierarchical model may be easily understood.

The object list may be the object container wherein the hierarchical relationship may be expressed when the object list has list information of object entry IDs pertaining to the object container. The object list and the relating object may be independent so that writing involving the object entry may not he used. The object pertaining to the object list may be the container having list information, that is, the object list. Also, the object entry need not he referred to in order to search the object list. Furthermore, the object entry indicative of the object list and the object list may be considered as one object.

Since the data quantity of list information may increase as the number of child objects increases and the list information may not he completed within one transaction, a special command may he prepared for obtaining list information.

By use of the above-mentioned features, an apparatus may be provided which conceals the internal structure of the descriptor and which accesses the layered object model and the object information. Further, since the data clement which is the access unit may also define the interlace, the design of the data structure of the inside of the object and the management mechanism may be flexible, Moreover, the interface may he designed so as to consider these mechanisms and may be deleted so as not to have independent accesses and side effects. Further, the present embodiment may simplify the packaging so as to increase interoperability.

An information clement may be defined as hereinbelow described.

The information element may have a data structure defined for an interlace to access an object. As represented in FIG. 1, a controller may access information elements by use of a command, whereupon such information elements may be considered as being within an object of a device.

Information elements may be separated into a number of types depending upon the kinds or types of information. Information elements may he defined as a unit and subunit. The information element type may have a 2 byte value, whereby the data structure of the information element may be prescribed. A unique 2-byte ID may be assigned to an information element of the object within the corresponding object and within the information clement type. The information clement may be uniquely specified by the information element type and information element ID.

The version of the information element type may be managed at every type. When a file is added or bits of a reserved field are used, compatibility or the like can be judged by the version number. The version numbers may indicate major versions and minor versions. When major numbers are coincident, information element types may be compatible even with a variation in the minor version numbers.

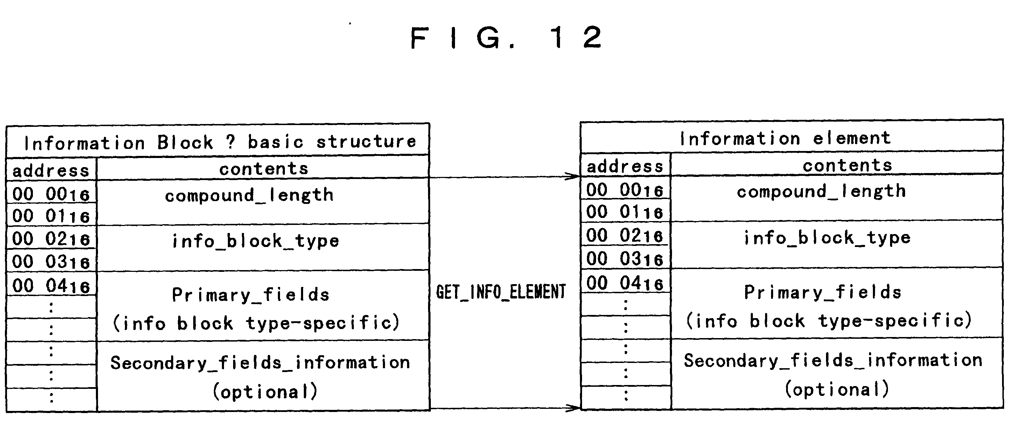

In the data structure of an information clement, the information clement ID may be indicated by describing types and IDs of other information elements. Thus, as shown in FIG. 12, the layered complex data structure may be expressed. However, accessing may be executed at every information element.

The present embodiment may utilize a number of commands to enable the AV/C descriptor to be easily accessed. These commands will now be described.

A GET_NUM_OF_ENTRIES command may be effective for an object list descriptor. This command may be used to obtain the total number of object entry descriptors within the object list descriptor.

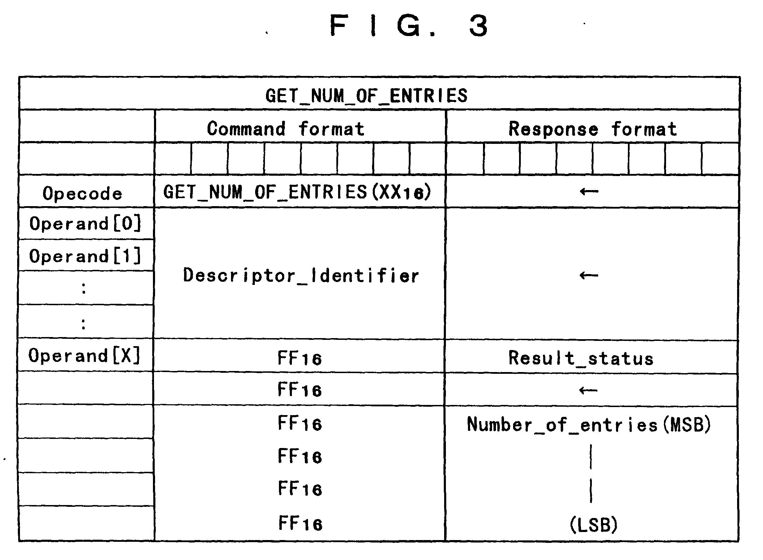

FIG. 3 illustrates a command format for GET_NUM_OF_ENTRIES and a response format corresponding thereto. Portions shown by " ← " in the response format indicate that data similar to that of the command format may be provided therein. Each operand may have 1 byte (8 bits) of data. Likewise, a number of the command formats may also have a similar size. The command format may include "Descriptor_Identifier" information which may be used to obtain the above-mentioned total number and which may have a variable length. Also, the response format may contain "Number_of_Entries" information of the object list descriptor and "Result_status" information which may represent a code used to determine whether or not the acquisition of information is approved.

A "LIST_ENTRY_ID" command may he effective for the object list descriptor. This command may be used to obtain a list of object IDs of an object entry descriptor or descriptors within the object list descriptor. Further, this command may be successively issued so as to obtain all object IDs.

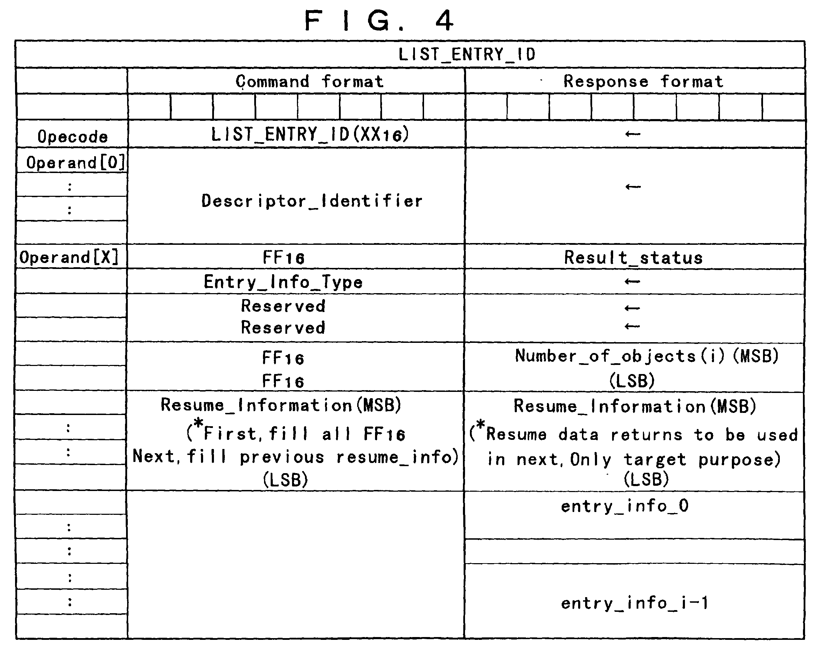

FIG. 4 illustrates a command format for LIST_ENTRY_ID and a response format corresponding thereto. "Descriptor_Identifier" information may indicate a descriptor used to obtain a list of object IDs and may have a variable length. "Entry_Info_Type" may indicate necessary information within the object entry. Further, the command format may include "Resume_Information" having 8 bytes of data in which each byte may be initially set to FF16. The response format may include "Resume_Information" having 8 bytes of data which may be used to issue a desired command that the controller wishes to obtain remaining information when, for example, all information instructed by the command format cannot be transmitted from the target side. The target side may determine based on the information of "Resume_Information" command whether new information should be obtained or the remaining information should he obtained. The response format may further include "Result_status" information which may represent a code used to determine whether or not the acquisition of information is approved.

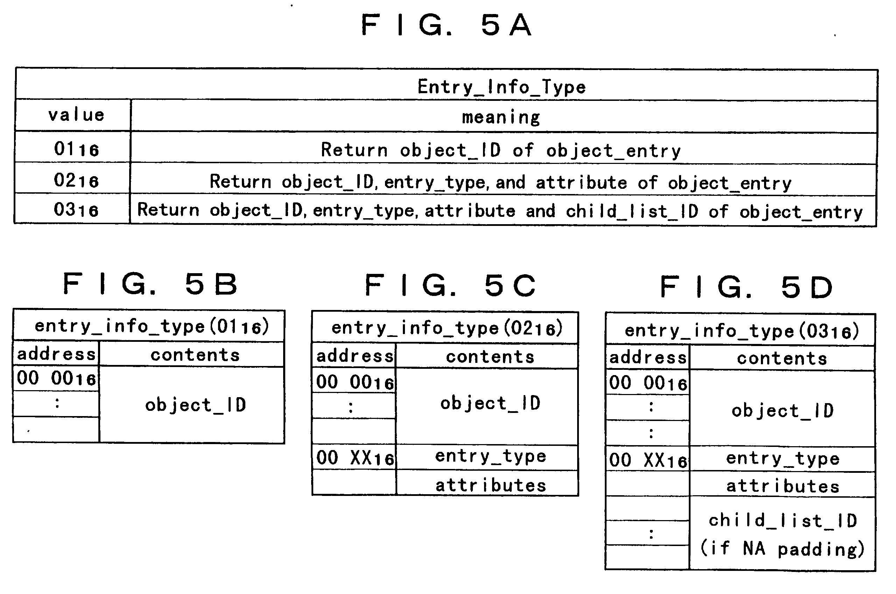

FIG. 5A illustrates an example of a "Entry_Info_Type" command. As shown in FIG. 5A, a value of "0116" may indicate that. "object_ID" information is necessary, wherein "entry_info_i" information in the response format may be "object_ID" information as shown in FIG. 5B. A value of "0216" may indicate that "object_ID", "entry_Type" and "attribute" are necessary, wherein "entry_info_i" information in the response format may be "object_ID", "entry_type" and "attributes" information as shown in FIG. 5C. Further, a value of "0316" may indicate that "object_ID", "entry_type", "attribute" and "child_list_ID" are necessary, wherein "entry_info_i" information in the response format may be "object_ID", "entry_type", "attributes" and "child_list_ID" information as shown in FIG. 5D. If "child_list_ID" does not exist, the corresponding portion may he padded with 0s (if NA padding).

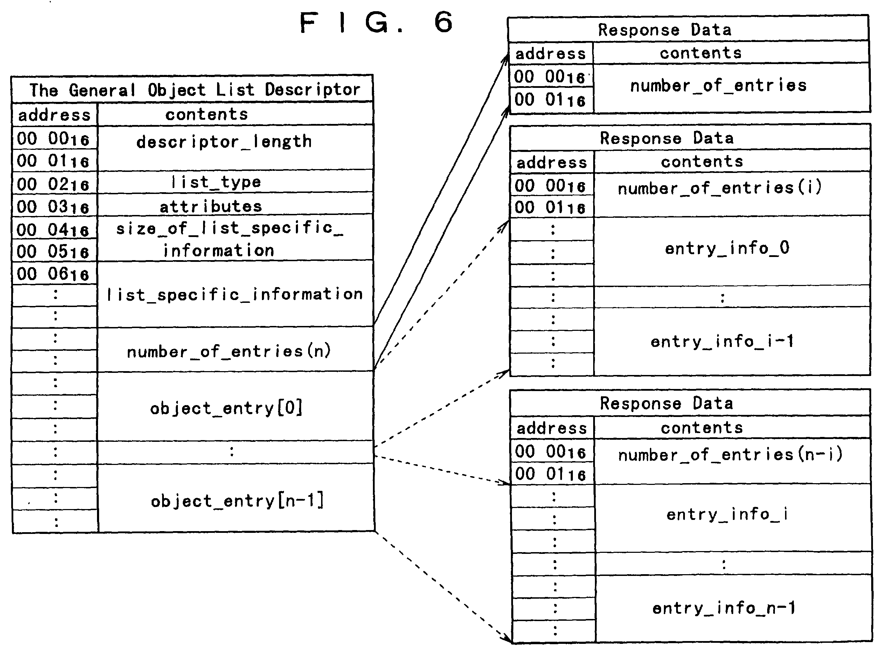

FIG. 6 illustrates a manner in which a number of different types of information may be obtained from the object list descriptor by the use of the GET_NUM_OF_ENTRIES and LIST_ENTRY_ID commands. In this case, the LIST_ENTRY_ID command may be issued twice.

"GET_INFO_ELEMENT" command may be effective for all descriptors. This command may be used to obtain (read) information from the descriptor.

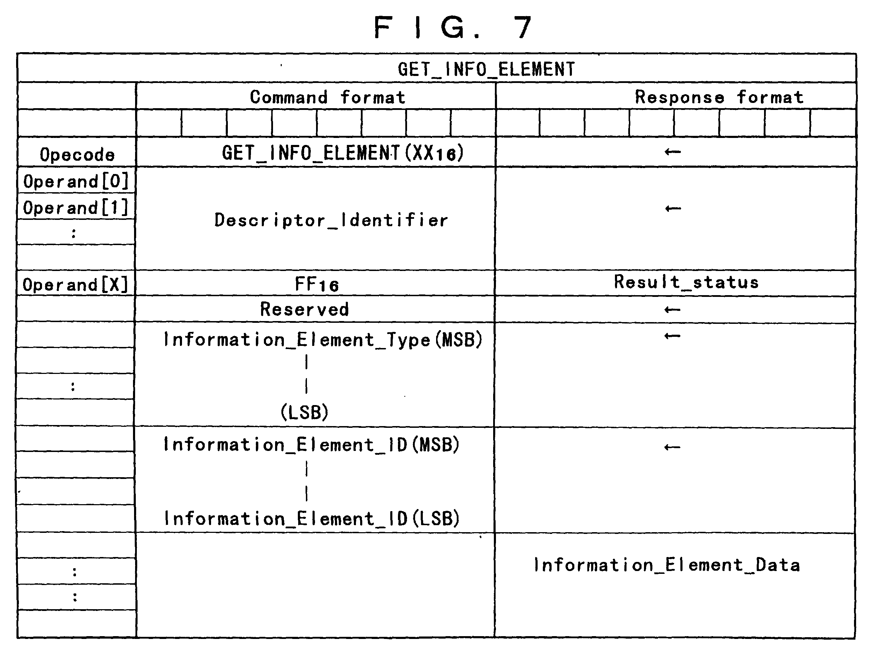

FIG. 7 illustrates a command format for GET_INFO_ELEMENT and a response format corresponding thereto, "Descriptor_Identifier" information may indicate a descriptor for obtaining the above-mentioned information and may have a variable length. Also, the command format may include "Information_Element_Type" and "Information_Element_ID" information which may be used to obtain desired information. The response format may include "Information_Element_Data" obtained from "Information_Element_Type" and "Information_Element_ID" commands and may have added thereto "Result_Status" information which may represent the code used to determine whether or not the acquisition of information is approved.

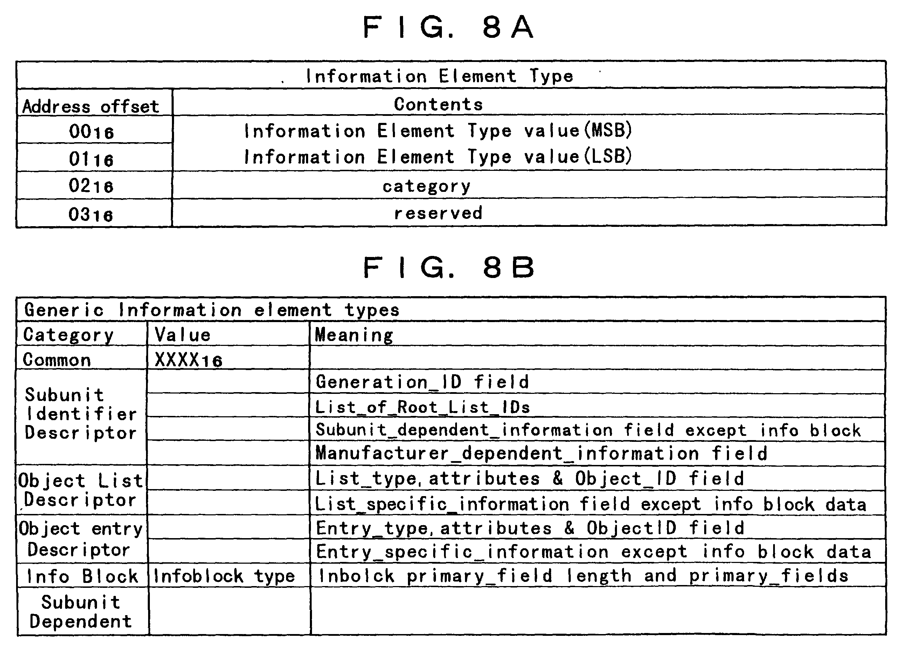

FIG. 8A illustrates "Information_Element_Type" information. This information may include "Information Element Type value" and "category" information. Further, "Information_Element_ID" may be used to respectively specify information when a plurality of information is requested by the "Information_Element_Type". FIG. 8B describes information clement types.

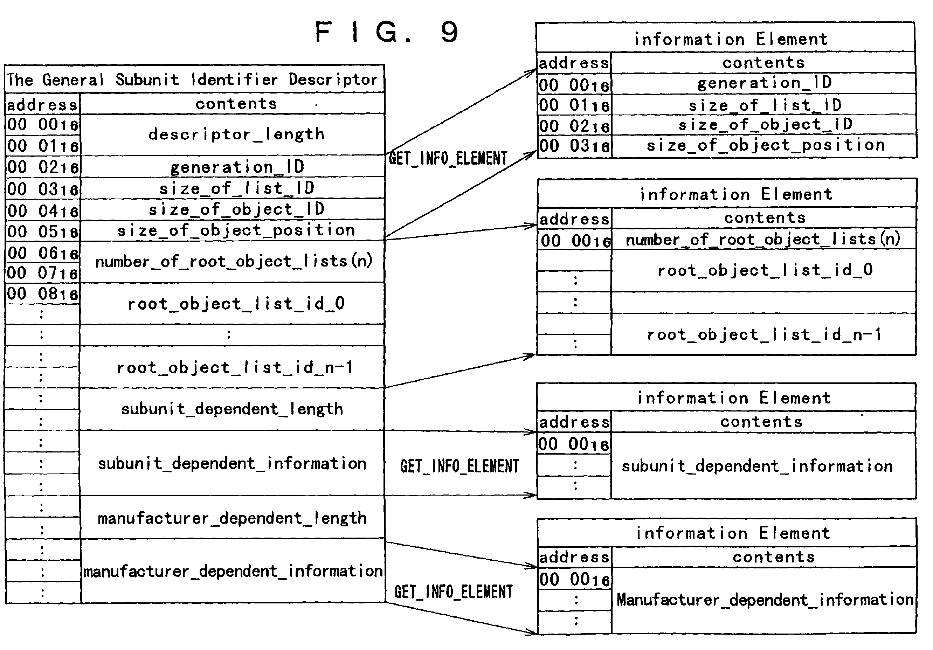

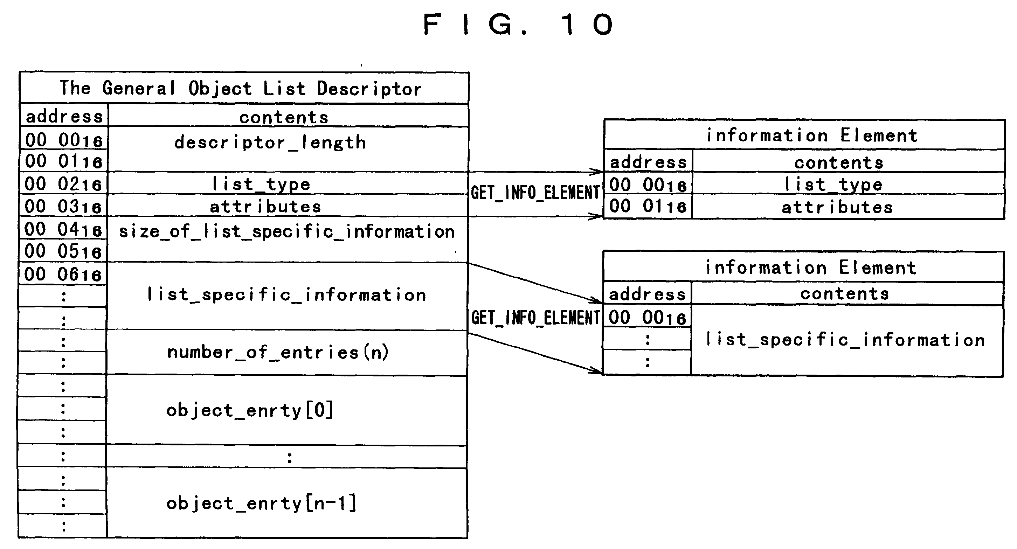

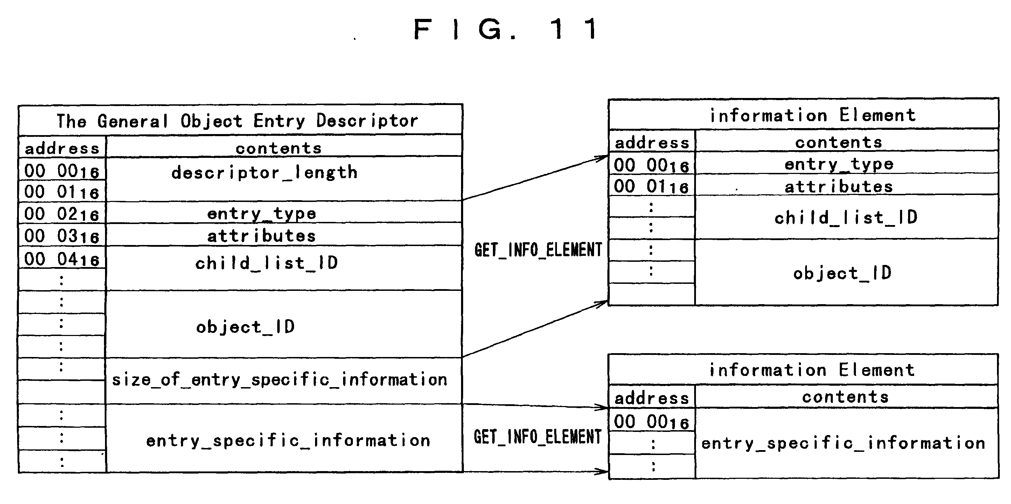

FIG. 9 illustrates a manner in which predetermined information (element) may be obtained from the subunit identifier descriptor by use of the GET_INFO_ELEMENT command. FIG. 10 illustrates a manner in which predetermined information (element) may be obtained from the object list descriptor by use of the GET_INFO_ELEMENT command. FIG. 11 illustrates a manner in which predetermined information (element) may be obtained from the object entry descriptor by use of the GET_INFO_ELEMENT command. Further, FIG. 12 illustrates a manner in which predetermined information (element) may be obtained from an information block within the descriptor by use of the GET_INFO_ELEMENT command.

"PUT_INFO_ELEMENT" command may be effective for all descriptors. This command may be used to write information in the descriptor.

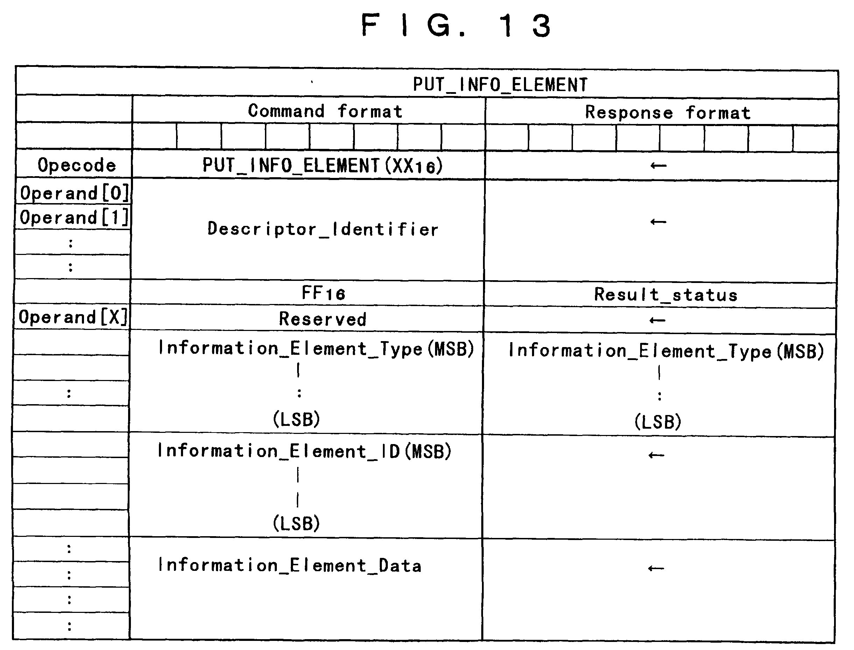

FIG. 13 illustrates a command format for PUT_INFO_ELEMENT and a response format corresponding thereto. "Descriptor_Identifier" information may indicate a dcscriptor for writing the above-mentioned information and may have a variable length. The command format may further include "Information_Element_Type" and "Information_Element_ID" information which may be used to obtain desired write information (element). This information may be similar to that in the GET_INFO_ELEMENT command. The command format may also include "Information_Element_Data" which is the information that should be written.

"GET_NUM_OF_INFO_ELEMENT" command may be effective for all descriptors. This command may he used to obtain the total number of information elements having the same "Information_Element_Type".

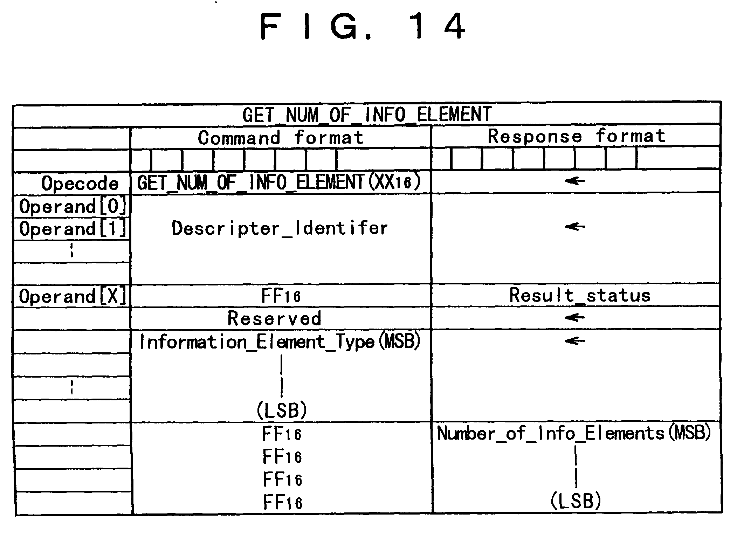

FIG. 14 illustrates a command format for GET_NUM_INFO_ELEMENT and a response format corresponding thereto. The command format may include "Information_Element_Type" information which indicates which total number should be obtained. Also, the response format may include total number information "Number_of_info_Element".

In the present embodiment, an image may be displayed in the above-mentioned system of FIG. 15 by the following procedure.

The IRD 200 may obtain the total number of objects from the object list descriptor of the DSC 100. In this case, the IRD 200 may issue the GET_NUM_OF_ENTRIES command (desc-ID = list-ID) to obtain object total number information "number-of-entries" from the response of the DSC 100. (The desc-ID represents the ID of the desired data and to access such data the list-ID may be initially utilized.) When the IRD 200 obtains the object total number "number-of-entries", it may cause the same number of rectangular areas to be displayed on the screen of the monitor 210 as, for example, shown in FIG. 24A.

The IRD 200 may obtain a list of object ID from the object entry descriptor of the DSC 100. In this case, the IRD 200 may issue a LIST_ENTRY_ID command (desc-ID = list-ID) to obtain "object_ID" information from the response of the DSC 100. Such "object_ID" information may be obtained from all object entry descriptors in response to the issued command. When the IRD 200 obtains a list of object ID, it may cause object IDs to be respectively displayed with the rectangular areas on the screen of the monitor 210 as shown in FIG. 24B.

The IRD 200 may obtain object attribute information (such as file name, size and date of creation) from the object entry descriptor of the DSC 100. In this case, the IRD 200 may issue a GET_INFO_ELEMENT command (desc-ID = list-ID + object-ID, and Info-Element-Type) to obtain object attribute information from the response of the DSC 100. The ID (desc-ID) and type information may he utilized to locate desired information of a respective object or element. Incidentally, Info_Element containing file name, size and date of creation may be defined. The attribute information may be obtained from all object entry descriptors in response to the issued command. When the IRD 200 obtains the attribute information of each object, it may cause attributes (such as file name and size) to he respectively displayed with the rectangular areas on the screen of the monitor 210 as shown in FIG. 24C.

The IRD 200 may issue a command to obtain thumb-nail or small-size image data of each object from the image memory of the DSC 100. When the IRD 200 obtains such data, it may cause small-size images of the respective objects to be displayed within the rectangular areas on the screen of the monitor 210 as shown in FIG. 24D.

When the small-size images of respective objects are displayed on the screen of the monitor 210 as described above, a user may select or designate a desired object. As a result, the IRD 200 may issue a command whereupon image data of the desired object may be obtained from the image memory of the DSC 100 and the designated object may be displayed in a large-size on the monitor 210 as shown in FIG. 24E.

Accordingly, the present embodiment enables the IRD 200 to efficiently receive only necessary information from the DSC 100 as a response by use of commands such as GET_NUM_OF_ENTRIES, LIST_ENTRY_ID, and GET_INFO_ELEMENT. Further, the IRD 200 may efficiently write desired information into the information storage medium of the DSC 100 by use of the PUT_INFO_ELEMENT command.

According to the present embodiment, an electronic device such as a digital still camera may receive a desired kind or type of information from an information storage medium by only issuing an instruction or command to receive this information to an information storage medium wherein such information is stored in the form of a descriptor structure. As a result, the desired type of in formation may be efficiently obtained. Additionally, writing instructions or commands may be provided to the information storage medium whereupon desired information may be written efficiently to the information storage medium.

While the present embodiment may be applied to an electronic device in which information is read out from an information storage medium of a digital still camera or in which information is written thereto, the present invention is not limited thereto. That is, the present invention may be applied to other types of electronic devices in which desired information is read out from an information storage medium wherein the information is stored in the form of a descriptor structure or in which desired information is written thereto.

Although preferred embodiments of the present invention and modifications thereof have been described in detail herein, it is to be understood that this invention is not limited to these embodiments and modifications, and that other modifications and variations may he effected by one skilled in the art without departing from the spirit and scope of the invention.

In so far as the embodiments of the invention described above are implemented at least in part using software-controlled data processing apparatus, it will be appreciated that a computer program providing such software control and a storage medium by which such a computer program is stored are envisaged as aspects of the present invention.

## Claims

1. An information processing apparatus comprising:
instruction means for issuing a request instruction having type and identification data for a desired type of information to an information memory adaptable for storing therein a plurality of types of information in the form of a descriptor structure; and
information reception means for receiving information corresponding to said request instruction from said information memory.

2. An information processing apparatus as in claim 1, wherein said information received by said information reception means from said information memory includes information for determining whether or not the reception of the desired type of information is approved.

3. An information processing apparatus as in claim 1, wherein said descriptor structure includes a plurality of descriptors and said instruction means instructs said descriptors as to where said desired type of information exist.

4. An information processing apparatus as in claim 1, wherein when said information reception means cannot receive all of said desired type of information from said information memory, said instruction means issues a second reception request instruction for the remaining desired type of information to said information memory.

5. An information processing apparatus as in claim 4, wherein when all of said desired type of information is not received by said in formation reception means from said information memory, the received information includes remaining request information for determining whether or not said information memory requests receipt of the remaining information and said instruction means issues the second reception request instruction for said remaining information to said information memory by using said remaining request information.

6. An information processing apparatus comprising:
instruction means for issuing a write request instruction for a desired type of information to a memory adaptable for storing therein a plurality of types of information in the form of a descriptor structure; and
input means for inputting said desired type of information having type and identification data.

7. An information processing apparatus according to claim 6, further comprising information reception means for receiving from said memory approval information for determining whether or not the writing of said desired type of information is approved.

8. An information processing method comprising the steps of:
issuing a reception request instruction having type and identification data for a desired type of information to an information memory adaptable for storing therein a plurality of types of information in the form of a descriptor structure; and
receiving information corresponding to said instruction from said information memory.

9. An information processing method comprising the steps of:
1. issuing a writing request instruction for a desired type of information to a memory adaptable for storing therein a plurality of types of information in the form of a descriptor structure; and
inputting said desired type of information having type and identification data.
